# EUROPEAN PATENT APPLICATION

(11) **EP 4 542 098 A1**
(43) Date of publication of application: **23.04.2025**
(21) Application number: 24205227.2
(22) Date of filing: 08.10.2024
(51) Int. Cl.: F16L 33/035

(54) **FLUID CONNECTION ASSEMBLY**

(30) Priority: 12.10.2023 US 202363589653 P
(71) Applicant: Oetiker NY, Inc., Lancaster NY 14086 (US)
(72) Inventor: KERN, Robert John, Williamsville 14221 (US); SAUSEN, Kari Ann, Clarence 14031 (US)
(74) Representative: Strehl & Partner mbB

(57) **Abstract**

A retainer (50, 150, 250) for a fluid connection assembly (10), including a clamping portion (64, 160, 180, 264), including a first end (52, 162, 252), a second end (54, 164, 254), a radially outward facing surface (56, 166, 256), a radially inward facing surface (58, 168, 258), a first circumferential end (66, 266), and a second circumferential end (68, 268) displaceable with respect to the first circumferential end (66, 266), and a locking portion, including a first tab (70, 200, 270) connected to the first circumferential end (66, 266), and a second tab (80, 210, 280) connected to the second circumferential end (68, 268), wherein the first tab (70, 200, 270) is arranged to engage the second tab (80, 210, 280) to lock the first tab (70, 200, 270) to the second tab (80, 210, 280).

## Description

### CROSS-REFERENCE TO RELATED APPLICATIONS

This application claims the benefit under 35 U.S.C. § 119(e) of U.S. Provisional Application No. 63/589,653, filed October 12, 2023, which application is incorporated herein by reference in its entirety.

### FIELD

The present disclosure relates to fluid connectors, and more particularly, to a fluid connection assembly including a retainer that decreases the insertion force required for assembly and allows for quick assembly and serviceability without the need for tools.

### BACKGROUND

Fluid connectors, fluid connections, and fluid connection assemblies are integral components for many applications, for example in residential and commercial appliance applications. Household appliances such as refrigerators, dishwashers, washing machines, and coffee makers require not only the supply of water, but also that water be able to travel between components therein. An example of water traveling between components is water traveling from the inlet to the heater and then to the brew basket. Fluid predominantly moves between components via flexible or rigid hoses which connect to each component by fluid connectors. Such fluid connectors typically include a plastic tube including a barb and a hose clamp that clamps a hose to the barbed tube.

However, there are many drawbacks with current designs. Current fluid connection designs are difficult to secure due to the small confines of the interior of an appliance and the requirement of tools. Additionally, the barbed tubes are susceptible to failure due to their size and brittle material, as well as the distribution of radial force of current hose clamp designs.

### SUMMARY

The present disclosure is directed to one or more exemplary embodiments of a retainer for a fluid connection assembly.

In an exemplary embodiment, the retainer comprises a clamping portion, including a first end, a second end, a radially outward facing surface, a radially inward facing surface, a first circumferential end, and a second circumferential end displaceable with respect to the first circumferential end, and a locking portion, including a first tab connected to the first circumferential end, and a second tab connected to the second circumferential end, wherein the first tab is arranged to engage the second tab to lock the first tab to the second tab.

In an exemplary embodiment, the radially outward facing surface comprises a plurality of notches extending radially inward therefrom. In an exemplary embodiment, the plurality of notches are spaced apart in a circumferential direction. In an exemplary embodiment, the plurality of notches extend from the first end to the second end.

In an exemplary embodiment, the radially inward facing surface comprises at least one rib arranged axially between and spaced apart from the first end and the second end. In an exemplary embodiment, the retainer further comprises a protrusion extending from the first circumferential end in a circumferential direction toward the second circumferential end. In an exemplary embodiment, the protrusion is connected to the radially inward facing surface and arranged axially adjacent to the rib. In an exemplary embodiment, the protrusion is operatively arranged to maintain axial alignment of the rib when the retainer is being locked. In an exemplary embodiment, at least one of the first tab and the second tab extends radially outward from the radially outward facing surface. In an exemplary embodiment, the first tab comprises a tapered surface.

In an exemplary embodiment, the second tab comprises a base and at least one arm extending from and pivotably connected to the base, wherein the at least one arm is operatively arranged to engage the first tab to lock the first tab to the second tab. In an exemplary embodiment, the at least one arm comprises a first arm connected to the base, and a second arm connected to the first arm. In an exemplary embodiment, the base extends radially outward from the radially outward facing surface, the first arm extends in a circumferential direction from the base, and the second arm extends radially inward from the first arm. In an exemplary embodiment, a channel is formed between the base, the first arm, and the second arm, and the first tab is operatively arranged to engage the channel to lock the first tab to the second tab. In an exemplary embodiment, the at least one arm comprises a tapered surface, wherein the tapered surface is operatively arranged to engage the first tab to displace the at least one arm.

The present disclosure is directed to one or more exemplary embodiments of a fluid connection assembly.

In an exemplary embodiment, the fluid connection assembly, comprises a first tube including a first end, a second end, a first radially outward facing surface, and a barb arranged at the second end and extending radially outward from the first radially outward facing surface, a second tube including a third end, a fourth end, a second radially outward facing surface, and a first radially inward facing surface arranged to engage the first radially outward facing surface, and a retainer, including a clamping portion comprising a fifth end, a sixth end, a third radially outward facing surface, and a second radially inward facing surface, and a locking portion comprising a first tab and a second tab, wherein the first tab is displaceable with respect to the second tab and the first tab is arranged to engage the second tab to lock the first tab to the second tab.

In an exemplary embodiment, the third radially outward facing surface comprises a plurality of notches extending radially inward therefrom. In an exemplary embodiment, the second radially inward facing surface comprises at least one rib arranged axially between and spaced apart from the fifth end and the sixth end. In an exemplary embodiment, at least one of the first tab and the second tab extends radially outward from the third radially outward facing surface. In an exemplary embodiment, the second tab forms a radial channel, and the first tab engages the radial channel to lock the first tab to the second tab.

The present disclosure is directed to one or more exemplary embodiments of a retainer for a fluid connection assembly.

In an exemplary embodiment, the retainer comprises a clamping portion, including a first end, a second end, a radially outward facing surface, a radially inward facing surface, a first circumferential end, and a second circumferential end displaceable with respect to the first circumferential end, and a locking portion, including a first tab connected to the first circumferential end, and a second tab connected to the second circumferential end, wherein the first tab is arranged to engage the second tab to lock the first tab to the second tab.

In an exemplary embodiment, the radially outward facing surface comprises a plurality of notches extending radially inward therefrom. In an exemplary embodiment, the plurality of notches are spaced apart in a circumferential direction. In an exemplary embodiment, the plurality of notches extend from the first end to the second end. In an exemplary embodiment, the radially inward facing surface comprises at least one rib arranged axially between and spaced apart from the first end and the second end. In an exemplary embodiment, at least one of the first tab and the second tab extends radially outward from the radially outward facing surface. In an exemplary embodiment, the first tab comprises at least one side tapered surface.

In an exemplary embodiment, the second tab comprises a base and at least one arm extending from and pivotably connected to the base, wherein the at least one arm is operatively arranged to engage the first tab to lock the first tab to the second tab. In an exemplary embodiment, the at least one arm comprises a first arm arranged at an acute angle with respect to the base, and a second arm arranged at an acute angle with respect to the base. In an exemplary embodiment, the at least one arm comprises a tapered surface, wherein the tapered surface is operatively arranged to engage the first tab to displace the at least one arm in an axial direction. In an exemplary embodiment, the at least one arm comprises a surface including a notch arranged to engage the first tab to lock the first tab to the second tab.

The present disclosure is directed to one or more exemplary embodiments of a fluid connection assembly.

In an exemplary embodiment, the fluid connection assembly comprises a first tube including a first end, a second end, a first radially outward facing surface, and a barb arranged at the second end and extending radially outward from the first radially outward facing surface, a second tube including a third end, a fourth end, a second radially outward facing surface, and a first radially inward facing surface arranged to engage the first radially outward facing surface, and a retainer, including a clamping portion comprising a fifth end, a sixth end, a third radially outward facing surface, and a second radially inward facing surface, and a locking portion comprising a first tab and a second tab, wherein the first tab is displaceable with respect to the second tab and the first tab is arranged to engage the second tab to lock the first tab to the second tab.

In an exemplary embodiment, the third radially outward facing surface comprises a plurality of notches extending radially inward therefrom. In an exemplary embodiment, the second radially inward facing surface comprises at least one rib arranged axially between and spaced apart from the fifth end and the sixth end. In an exemplary embodiment, at least one of the first tab and the second tab extends radially outward from the third radially outward facing surface. In an exemplary embodiment, the first tab comprises at least one side tapered surface. In an exemplary embodiment, the second tab comprises a base and at least one arm extending from and pivotably connected to the base, wherein the at least one arm is operatively arranged to engage the first tab to lock the first tab to the second tab.

In an exemplary embodiment, the clamping section comprises a first curvilinear section and a second curvilinear section pivotably connected to the first curvilinear section. In an exemplary embodiment, the first curvilinear section extends through a hole in the second curvilinear section. In an exemplary embodiment, the second section is completely removable from the first section.

These and other objects, features, and advantages of the present disclosure will become readily apparent upon a review of the following detailed description of the disclosure, in view of the drawings and appended claims.

### BRIEF DESCRIPTION OF THE DRAWINGS

The accompanying drawings are incorporated herein as part of the specification. The drawings described herein illustrate embodiments of the presently disclosed subject matter and are illustrative of selected principles and teachings of the present disclosure, in which corresponding reference symbols indicate corresponding parts. However, the drawings do not illustrate all possible implementations of the presently disclosed subject matter and are not intended to limit the scope of the present disclosure in any way.
FIG. 1 is a perspective view of a fluid connection assembly.
FIG. 2 is a cross-sectional view of the fluid connection assembly taken generally along line 2-2 in FIG. 1.
FIG. 3A is a front perspective view of the first embodiment of the retainer shown in FIG. 1.
FIG. 3B is a rear perspective view of the first embodiment of the retainer shown in FIG. 3A.
FIG. 4 is a cross-sectional view of the first embodiment of the retainer taken generally along line 4-4 in FIG. 3B.
FIG. 5A is a front perspective view of the second embodiment of the retainer shown in FIG. 1.
FIG. 5B is a rear perspective view of the second embodiment of the retainer shown in FIG. 5A.
FIG. 6 is a cross-sectional view of the second embodiment of the retainer taken generally along line 6-6 in FIG. 5A.
FIG. 7 is a front exploded perspective view of the second embodiment of the retainer shown in FIG. 5A.
FIG. 8A is a front perspective view of the third embodiment of the retainer shown in FIG. 1.
FIG. 8B is a rear perspective view of the third embodiment of the retainer shown in FIG. 8A.
FIG. 8C is a top plan view of the third embodiment of the retainer shown in FIG. 8A.
FIG. 9 is a cross-sectional view of the third embodiment of the retainer taken generally along line 9-9 in FIG. 8A.

### DETAILED DESCRIPTION

It is to be understood that the invention may assume various alternative orientations and step sequences, except where expressly specified to the contrary. It is also to be understood that the specific assemblies and systems illustrated in the attached drawings and described in the following specification are simply exemplary embodiments of the inventive concepts defined herein. Hence, specific dimensions, directions, or other physical characteristics relating to the embodiments disclosed are not to be considered as limiting, unless expressly stated otherwise. Also, although they may not be, like elements in various embodiments described herein may be commonly referred to with like reference numerals within this section of the application.

Furthermore, it is understood that this disclosure is not limited to the particular methodology, materials and modifications described and as such may, of course, vary. It is also understood that the terminology used herein is for the purpose of describing particular aspects only, and is not intended to limit the scope of the claims.

Unless defined otherwise, all technical and scientific terms used herein have the same meaning as commonly understood to one of ordinary skill in the art to which this disclosure pertains. It should be understood that any methods, devices or materials similar or equivalent to those described herein can be used in the practice or testing of the example embodiments.

Where used herein, the terms "first," "second," and so on, do not necessarily denote any ordinal, sequential, or priority relation, but are simply used to more clearly distinguish one element or set of elements from another, unless specified otherwise.

Where used herein, the term "about" when applied to a value is intended to mean within the tolerance range of the equipment used to produce the value, or, in some examples, is intended to mean plus or minus 10%, or plus or minus 5%, or plus or minus 1%, unless otherwise expressly specified.

It should be appreciated that the term "substantially" is synonymous with terms such as "nearly," "very nearly," "about," "approximately," "around," "bordering on," "close to," "essentially," "in the neighborhood of," "in the vicinity of," etc., and such terms may be used interchangeably as appearing in the specification and claims. It should be appreciated that the term "proximate" is synonymous with terms such as "nearby," "close," "adjacent," "neighboring," "immediate," "adjoining," etc., and such terms may be used interchangeably as appearing in the specification and claims. The term "substantially" is intended to mean values within ten percent of the specified value.

Where used herein, the term "exemplary" is intended to mean "an example of," "serving as an example," or "illustrative," and does not denote any preference or requirement with respect to a disclosed aspect or embodiment.

It should be understood that use of "or" in the present application is with respect to a "non-exclusive" arrangement, unless stated otherwise. For example, when saying that "item x is A or B," it is understood that this can mean one of the following: (1) item x is only one or the other of A and B; (2) item x is both A and B. Alternately stated, the word "or" is not used to define an "exclusive or" arrangement. For example, an "exclusive or" arrangement for the statement "item x is A or B" would require that x can be only one of A and B. Furthermore, as used herein, "and/or" is intended to mean a grammatical conjunction used to indicate that one or more of the elements or conditions recited may be included or occur. For example, a device comprising a first element, a second element and/or a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or a device comprising a second element and a third element.

Moreover, as used herein, the phrases "comprises at least one of" and "comprising at least one of" in combination with a system or element is intended to mean that the system or element includes one or more of the elements listed after the phrase. For example, a device comprising at least one of: a first element; a second element; and a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or a device comprising a second element and a third element. A similar interpretation is intended when the phrase "used in at least one of:" is used herein.

It should be appreciated that the term "tube" as used herein is synonymous with hose, pipe, channel, conduit, tube end form, or any other suitable pipe flow used in hydraulics and fluid mechanics. It should further be appreciated that the term "tube" can mean a rigid or flexible conduit of any material suitable for containing and allowing the flow of a gas or a liquid.

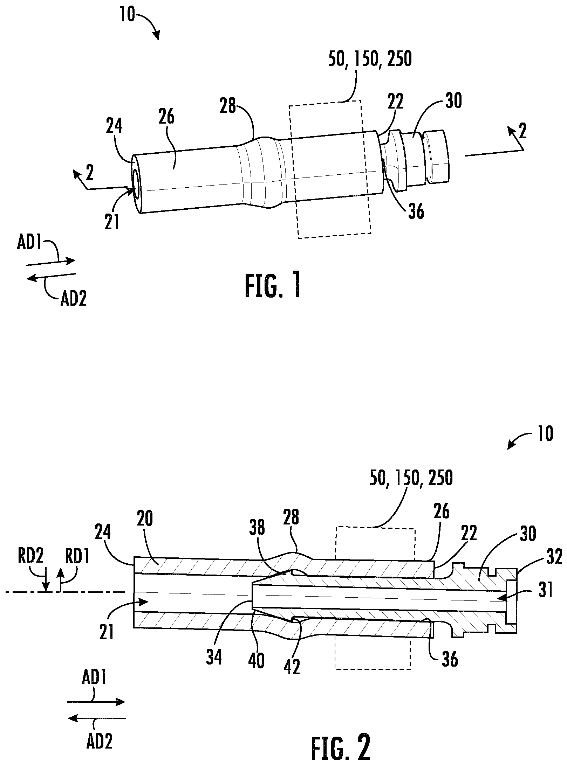

Adverting now to the figures, FIG. 1 is a perspective view of fluid connection assembly 10. FIG. 2 is a cross-sectional view of fluid connection assembly 10 taken generally along line 2-2 in FIG. 1. Fluid connection assembly 10 generally comprises tube 20, tube or connector body 30, and retainer 50, 150, 250.

Tube 20 comprises end 22, end 24, radially outward facing surface 26, and through-bore 21. Through-bore 21 extends through tube 20 from end 22 to end 24. Tube 20 is operatively arranged to be fluidly connected to tube 30 by retainer 50, 150, 250. Radially outward facing surface 26 includes a substantially constant diameter. In an exemplary embodiment, tube 20 is a flexible conduit operatively arranged to engage tube 30. In such exemplary embodiment, the barb of tube 30 creates bulge 28 when arranged in through-bore 21. Specifically, tube 20 is arranged to be slid onto tube 30 in axial direction AD1 such that end 22 is aligned with radially outward facing surface 36 (see FIG. 2). Retainer 50, 150, 250 can be arranged around radially outward facing surface 26 to secure tube 20 to tube 30, as will be described in greater detail below.

Tube 30 comprises end 32, end 34, at least one radially outward facing surface, for example radially outward facing surface 36, through-bore 31, and barb 38. Through-bore 31 extends through tube 30 from end 32 to end 34. Radially outward facing surface 36 is arranged axially between end 32 and barb 38. In an exemplary embodiment, radially outward facing surface 36 comprises a constant diameter. In an exemplary embodiment, radially outward facing surface 36 comprises a variable diameter. Barb 38 is arranged at end 34 and comprises radially outward facing surface 40 and surface 42. Radially outward facing surface 40 extends from end 34 to radially outward facing surface 36. In an exemplary embodiment, and as shown, radially outward facing surface 40 is a frusto-conical surface increasing in diameter in axial direction AD 1. Radially outward facing surface 40 is connected to radially outward facing surface 36 via surface 42. In an exemplary embodiment, surface 42 is a substantially axial surface facing in axial direction AD1.

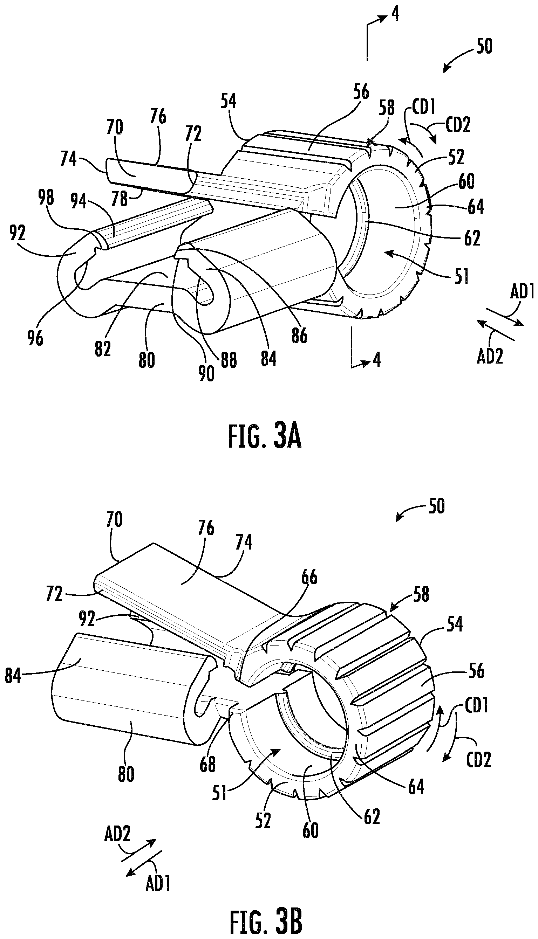

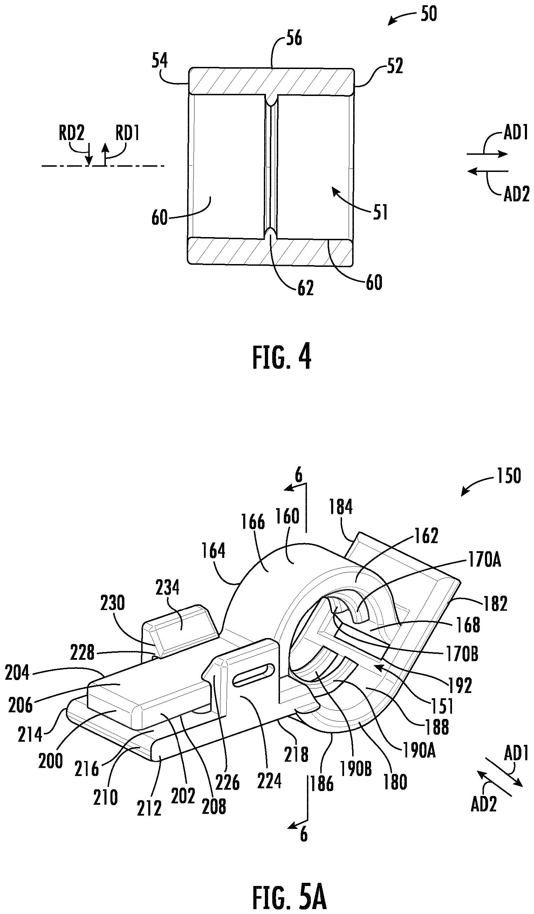

FIG. 3A is a front perspective view retainer 50. FIG. 3B is a rear perspective view of retainer 50. FIG. 4 is a cross-sectional view of retainer 50 taken generally along line 4-4 in FIG. 3B. Retainer 50 comprises end 52, end 54, radially outward facing surface 56, radially inward facing surface 60, and through-bore 51. Through-bore 51 extends through retainer 50 from end 52 to end 54. Retainer 50 is operatively arranged to secure tube 20 to tube 30.

Radially outward facing surface 56 comprises a plurality of notches 58 extending radially inward therefrom. Notches 58 allow retainer 50 to flex and provide a tighter securement of tube 20 to tube 30. In an exemplary embodiment, one or more notches 58 extend completely from end 52 to end 54. Radially inward facing surface 60 comprises rib 62 arranged axially between and spaced apart from end 52 and end 54. In an exemplary embodiment, and as best shown in FIG. 4, rib 62 comprises a first surface extending radially inward from radially inward facing surface 60 and facing in axial direction AD1, a second surface extending radially inward from radially inward facing surface 60 and facing in axial direction AD2, and a third curvilinear convex surface connecting the first surface and the second surface.

Retainer 50 comprises ring or clamping portion 64 which is generally cylindrical. Ring portion 64 comprises circumferential end 66 and circumferential end 68. Circumferential end 68 is displaceable with respect to circumferential end 66. Retainer 50 further comprises a locking means. For example, as shown, retainer 50 comprises male connector portion or tab 70 and female connector portion or tab 80. Tab 70 is connected to and extends from end 66 and tab 80 is connected to and extends from end 68. In an exemplary embodiment, tab 70 and/or tab 80 extends radially outward from radially outward facing surface 56.

Tab 70 comprises tapered surface 72, tapered surface 74, top surface 76, and bottom surface 78. Tapered surfaces 72 and 74 decrease the width of tab 70 in a direction from top surface 76 to bottom surface 78. Tapered surface 72 and 74 help facilitate the connection of tab 70 with female connector portion 80, namely, arms 84 and 92. Tab 80 comprises base 82 and at least one arm operatively arranged to engage tab 70 to lock tab 70 to tab 80, for example, arms 84 and 92.

Arm 84 is pivotably connected to base 82 and extends therefrom toward tab 70. In an exemplary embodiment, arm 84 is arranged at an acute angle with respect to base 82 (e.g., 45°). Arm 84 extends toward tab 70 in axial direction AD2. Arm 84 comprises tapered surface 86 operatively arranged to engage tapered surface 72. Specifically, as tab 70 is locked into female connector portion 80, tapered surface 72 engages tapered surface 86 and forces arm 84 in axial direction AD 1. Once tab 70 clears arm 84, arm 84 snaps back to its original position and locks tab 70 to tab 80. Arm 84 further comprises surface 88 arranged to engage top surface 76 to lock tab 70 to tab 80. In an exemplary embodiment, surface 88 comprises notch 90 operatively arranged to engage top surface 76 to lock tab 70 to tab 80.

Arm 92 is pivotably connected to base 82 and extends therefrom toward tab 70. In an exemplary embodiment, arm 92 is arranged at an acute angle with respect to base 82 (e.g., 45°). Arm 92 extends toward tab 70 in axial direction AD1. Arm 92 comprises tapered surface 94 operatively arranged to engage tapered surface 74. Specifically, as tab 70 is locked into female connector portion 80, tapered surface 74 engages tapered surface 94 and forces arm 92 in axial direction AD2. Once tab 70 clears arm 92, arm 92 snaps back to its original position and locks tab 70 to tab 80. Arm 92 further comprises surface 96 arranged to engage top surface 76 to lock tab 70 to tab 80. In an exemplary embodiment, surface 96 comprises notch 98 operatively arranged to engage top surface 76 to lock tab 70 to tab 80.

It should be appreciated that base 82 and arms 84 and 92 generally form a groove in which tab 70 may be arranged to lock tab 70 to tab 80. In this locked state, the diameter of ring portion 64, namely, radially inward facing surface 60 decreases thus squeezing tube 20 around tube 30 and securing the two together.

To assemble fluid connection assembly 10, tube 20 is slid onto tube 30 such that end 22 is arranged axially between barb 40 and end 32. Retainer 50 is arranged radially around tube 20 and tube 30 with tab 70 unconnected from tab 80. Tab 70 is then displaced toward tab 80 until arms 84 and 92 snap over tab 70 and engage top surface 76, thereby locking tab 70 to tab 80. Ring portion 64 squeezes tube 20 around tube 30. Specifically, rib 62 provides an acute radial force on tube 20 to facilitate a sealing connection between tube 20 and tube 30.

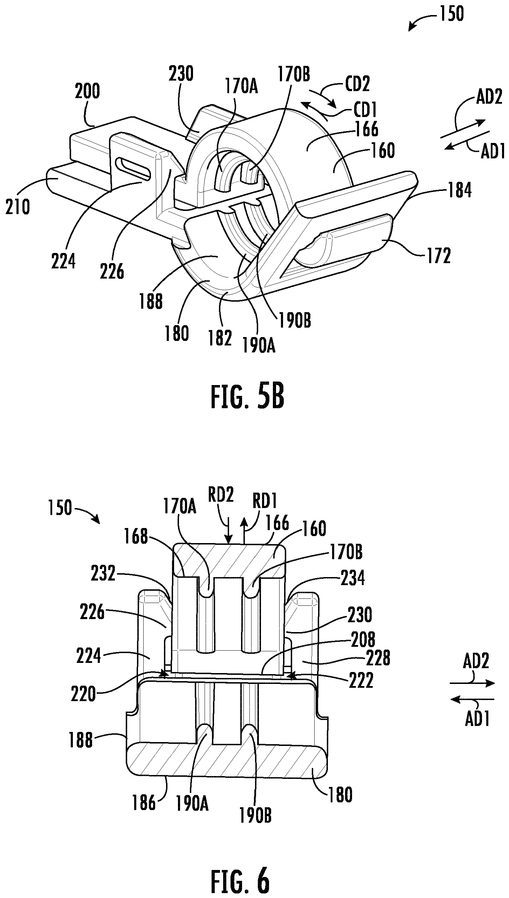

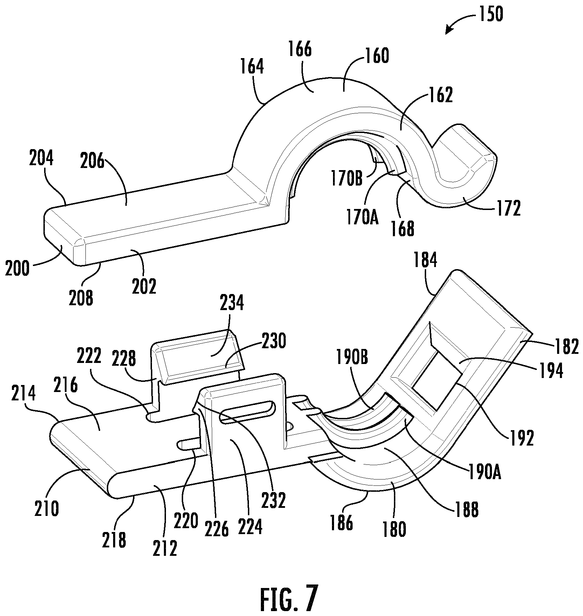

FIG. 5A is a front perspective view of retainer 150. FIG. 5B is a rear perspective view of retainer 150. FIG. 6 is a cross-sectional view of retainer 150 taken generally along line 6-6 in FIG. 5A. FIG. 7 is a front exploded perspective view of retainer 150. Retainer 150 comprises curvilinear section 160, curvilinear section 180, and through-hole 151.

Section 160 comprises end 162, end 164, radially outward facing surface 166, and radially inward facing surface 168. Radially inward facing surface 168 comprises at least one rib, for example, ribs 170A and 170B, arranged axially between and spaced apart from end 162 and end 164. In an exemplary embodiment, ribs 170A and 170B are also axially spaced apart from each other. In an exemplary embodiment, and as best shown in FIG. 6, at least one of ribs 170A and 170B comprises a first surface extending radially inward from radially inward facing surface 168 and facing in axial direction AD1, a second surface extending radially inward from radially inward facing surface 168 and facing in axial direction AD2, and a third curvilinear convex surface connecting the first surface and the second surface. Section 160 further comprises hinge portion or hook 172 which generally extends radially outward from radially outward facing surface 166. In an exemplary embodiment, hook 172 comprises a radially inward facing surface that faces an opposite direction as radially inward facing surface 168 (i.e., section 160 resembles an "s" shape).

Section 180 comprises end 182, end 184, radially outward facing surface 186, and radially inward facing surface 188. Radially inward facing surface 188 comprises at least one rib, for example, ribs 190A and 190B, arranged axially between and spaced apart from end 182 and end 184. In an exemplary embodiment, ribs 190A and 190B are also axially spaced apart from each other. In an exemplary embodiment, and as best shown in FIG. 6, at least one of ribs 190A and 190B comprises a first surface extending radially inward from radially inward facing surface 188 and facing in axial direction AD1, a second surface extending radially inward from radially inward facing surface 188 and facing in axial direction AD2, and a third curvilinear convex surface connecting the first surface and the second surface. Section 180 further comprises hole 192. Hook 172 is operatively arranged to engage hole 192 to form a hinged or pivotable connection between section 160 and section 180. In an exemplary embodiment, hook 172 extends radially outward through hole 192 and is capable of engaging radially outward facing surface 186. In an exemplary embodiment, section 180 further comprises one or more tapered surfaces 194 arranged immediately adjacent hole 192.

Retainer 150 further comprises a locking means. For example, as shown, retainer 150 comprises male connector portion or tab 200 and female connector portion or tab 210. Tab 200 is connected to and extends from curvilinear section 160 and tab 210 is connected to and extends from curvilinear section 180. In an exemplary embodiment, tab 200 extends radially outward from radially outward facing surface 166. In an exemplary embodiment, tab 210 extends radially outward from radially outward facing surface 186.

Tab 200 comprises side 202, side 204, top surface 206, and bottom surface 208. In an exemplary embodiment, tab 200 is linear. Tab 210 comprises side 212, side 214, top surface 216, bottom surface 218, and at least one arm operatively arranged to engage tab 200 to lock tab 200 to tab 210, for example, arms 224 and 228.

Arm 224 is pivotably connected to top surface 216 and extends therefrom toward tab 200. Arm 224 comprises protrusion 226 operatively arranged to engage top surface 206 to lock tab 200 to tab 210. In an exemplary embodiment, protrusion 226 comprises tapered surface 232 operatively arranged to engage bottom surface 208 and/or side 202. Specifically, as tab 200 is locked into female connector portion 210, side 202 engages tapered surface 232 and forces arm 224 in axial direction AD1. Once tab 200 clears protrusion 226, arm 224 snaps back to its original position and locks tab 200 to tab 210. In an exemplary embodiment, tab 210 further comprises hole 220 arranged immediately adjacent to arm 224. The arrangement of hole 220 allows arm 224 to better pivot with respect to top surface 216. In an exemplary embodiment, hole 220 extends at least partially from top surface 216 to bottom surface 218.

Arm 228 is pivotably connected to top surface 216 and extends therefrom toward tab 200. Arm 228 comprises protrusion 230 operatively arranged to engage top surface 206 to lock tab 200 to tab 210. In an exemplary embodiment, protrusion 230 comprises tapered surface 234 operatively arranged to engage bottom surface 208 and/or side 204. Specifically, as tab 200 is locked into female connector portion 210, side 204 engages tapered surface 234 and forces arm 228 in axial direction AD2. Once tab 200 clears protrusion 230, arm 228 snaps back to its original position and locks tab 200 to tab 210. In an exemplary embodiment, tab 210 further comprises hole 222 arranged immediately adjacent to arm 228. The arrangement of hole 222 allows arm 228 to better pivot with respect to top surface 216. In an exemplary embodiment, hole 222 extends at least partially from top surface 216 to bottom surface 218.

It should be appreciated that top surface 216, arms 224 and 228, and protrusions 226 and 230 generally form a groove in which tab 200 may be arranged to lock tab 200 to tab 210. In this locked state, the diameter formed between radially inward facing surface 168 and radially inward facing surface 188 is decreased thus squeezing tube 20 around tube 30 and securing the two together.

To assemble fluid connection assembly 10, tube 20 is slid onto tube 30 such that end 22 is arranged axially between barb 40 and end 32. Retainer 150 is arranged radially around tube 20 and tube 30 with tab 200 unconnected from tab 210. In the connected state of fluid connection assembly 10, hook 172 is pivotably engaged with hole 192 and section 160 is displaced radially toward and secured to section 180. For example, tab 200 is then displaced toward tab 210 until projections 226 and 230 snap over tab 200 and engage top surface 206, thereby locking tab 200 to tab 210. Radially inward facing surfaces 168 and 188 are engaged with radially outward facing surface 26 and squeeze tube 20 around tube 30. Specifically, ribs 170A-170B and 190A-190B provide acute radial forces on tube 20 at multiple axial locations to facilitate a sealing connection between tube 20 and tube 30.

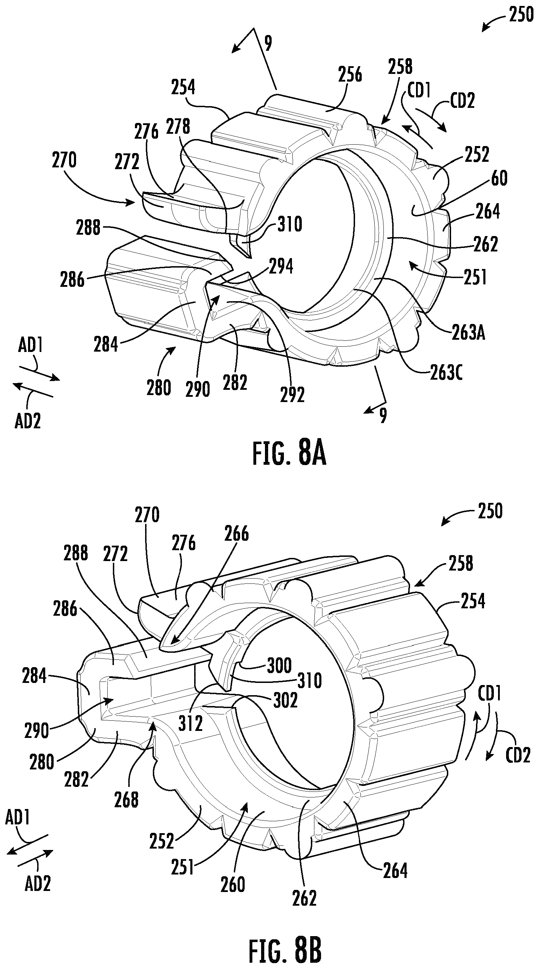

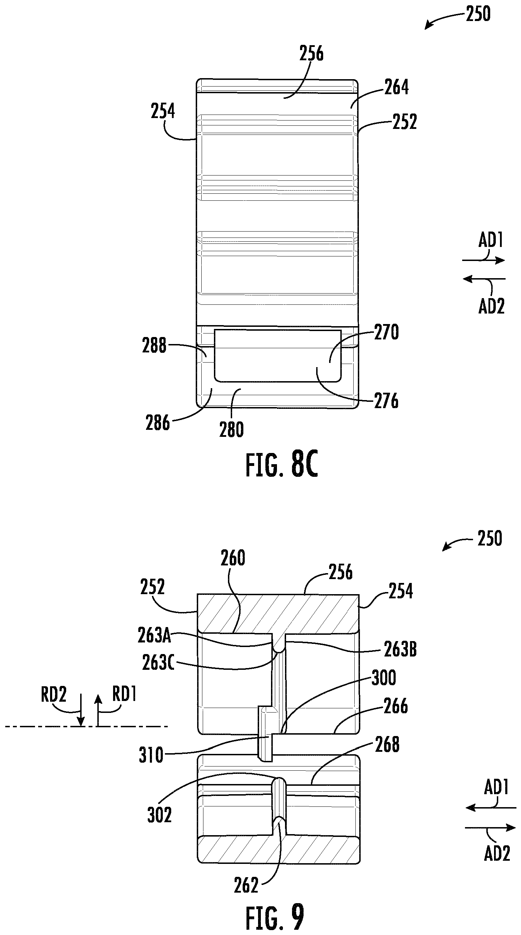

FIG. 8A is a front perspective view of retainer 250. FIG. 8B is a rear perspective view of retainer 250. FIG. 8C is a top plan view of retainer 250. FIG. 9 is a cross-sectional view of retainer 250 taken generally along line 9-9 in FIG. 8A. Retainer 250 comprises end 252, end 254, radially outward facing surface 256, radially inward facing surface 260, and through-bore 251. Through-bore 251 extends through retainer 250 from end 252 to end 254. Retainer 250 is operatively arranged to secure tube 20 to tube 30.

Radially outward facing surface 256 comprises a plurality of notches 258 extending radially inward therefrom. Notches 258 allow retainer 250 to flex and provide a tighter securement of tube 20 to tube 30. In an exemplary embodiment, one or more notches 258 extend completely from end 252 to end 254. Radially inward facing surface 260 comprises rib 262 arranged axially between and spaced apart from end 252 and end 254. In an exemplary embodiment, and as best shown in FIG. 9, rib 262 comprises first surface 263A extending radially inward from radially inward facing surface 260 and facing in axial direction AD1, second surface 263B extending radially inward from radially inward facing surface 260 and facing in axial direction AD2, and third curvilinear convex surface 263C connecting first surface 263A and second surface 263B. Rib 262 further comprises first circumferential end 300 and second circumferential end 302.

Retainer 250 comprises ring or clamping portion 264 which is generally cylindrical. Ring portion 264 comprises circumferential end 266 and circumferential end 268. Circumferential end 268 is displaceable with respect to circumferential end 266. In an exemplary embodiment, circumferential end 300 is aligned with circumferential end 266 and/or circumferential end 302 is aligned with circumferential end 268. Retainer 250 further comprises a locking means. For example, as shown, retainer 250 comprises male connector portion or tab 270 and female connector portion or tab 280. Tab 270 is connected to and extends from end 266 and tab 280 is connected to and extends from end 268. In an exemplary embodiment, tab 270 and/or tab 280 extends radially outward from radially outward facing surface 256.

Tab 270 comprises tapered surface 272, top surface 276, and bottom surface 278. Tapered surface 272 helps facilitate the connection of tab 270 with female connector portion 280, namely, arm 286. In an exemplary embodiment, surface 272 is a curvilinear surface. In an exemplary embodiment, the width of ring portion 264 is greater than the width of tab 270. In an exemplary embodiment, tab 270 is arranged axially between and spaced apart from end 252 and end 254.

Tab 280 comprises base 282 and at least one arm, for example, arm 284 and arm 286, and is operatively arranged to engage tab 270 to lock tab 270 to tab 280. Arm 284 is connected to base 282 and extends therefrom toward tab 270. In an exemplary embodiment, arm 284 is pivotably connected to base 282. In an exemplary embodiment, arm 284 is arranged substantially perpendicular to base 282. Arm 286 is connected to arm 284 and extends therefrom generally radially inward. In an exemplary embodiment, arm 286 is pivotably connected to arm 284. In an exemplary embodiment, arm 286 is arranged parallel to base 282. Arm 286 comprises tapered surface 288 to help facilitate the connection of tab 270 with female connector portion 280. Base comprises surface 292 and arm 286 comprises surface 294. In an exemplary embodiment, surface 294 is arranged parallel to surface 292.

Base 282, arm 284, and arm 286 form channel 290, which tab 270 engages to lock tab to portion 280. Specifically, as tab 270 is locked into female connector portion 280, tapered surface 272 engages tapered surface 288 and forces arm 286 and/or arm 284 in a radially outward direction (e.g., radial direction RD1). Once tab 270 clears arm 286, arm 286 snaps back to its original position and locks tab 270 to tab 280. Arm 286 comprises surface 294 arranged to engage top surface 276 to lock tab 270 to tab 280. It should be appreciated that base 282 and arms 284 and 286 generally form channel 290 in which tab 270 may be arranged to lock tab 270 to tab 280. In this locked state, the diameter of ring portion 264, namely, radially inward facing surface 260 decreases thus squeezing tube 20 around tube 30 and securing the two together.

Retainer 50 further comprises alignment protrusion 310. Protrusion 310 is connected to one of end 300 and end 302 and extends circumferentially therefrom. For example, protrusion 310 is connected to rib 262 at end 300 and extends in circumferential direction CD1 therefrom, toward end 302. Protrusion 310 is arranged on one side of rib 262 such that, as retainer 250 is being closed or locked, it maintains alignment of rib 262 in an axial direction completely around radially inward facing surface 260. For example, and as best shown in FIG. 9, protrusion 310 is arranged axially adjacent to rib 262 and connected to surface 263A. Protrusion 310 extends circumferentially past end 300 toward end 302, and when retainer 250 is closed protrusion 310 will engage surface 263A proximate end 302. This maintains the axial alignment of rib 262. In an exemplary embodiment, protrusion 310 comprises tapered surface 312 which facilitates easy closing of retainer 250, for example, such that protrusion 310 doesn't get caught on radially inward facing surface 260.

To assemble fluid connection assembly 10, tube 20 is slid onto tube 30 such that end 22 is arranged axially between barb 40 and end 32. Retainer 250 is arranged radially around tube 20 and tube 30 with tab 270 unconnected from tab 280. Tab 270 is then displaced toward tab 280 until arm 286 snaps over tab 270 and engages top surface 276, thereby locking tab 270 to tab 280. Ring portion 264 squeezes tube 20 around tube 30. Specifically, rib 262 provides an acute radial force on tube 20 to facilitate a sealing connection between tube 20 and tube 30.

It will be appreciated that various aspects of the disclosure above and other features and functions, or alternatives thereof, may be desirably combined into many other different systems or applications. Various presently unforeseen or unanticipated alternatives, modifications, variations, or improvements therein may be subsequently made by those skilled in the art which are also intended to be encompassed by the following claims.

### REFERENCE NUMERALS

- 10: Fluid connection assembly
- 20: Tube
- 21: Through-bore
- 22: End
- 24: End
- 26: Radially outward facing surface
- 28: Bulge
- 30: Tube or connector body
- 31: Through-bore
- 32: End
- 34: End
- 36: Radially outward facing surface
- 38: Barb
- 40: Radially outward facing surface
- 42: Surface
- 50: Retainer
- 51: Through-bore
- 52: End
- 54: End
- 56: Radially outward facing surface
- 58: Notches
- 60: Radially inward facing surface
- 62: Rib
- 64: Ring portion
- 66: End
- 68: End
- 70: Male connector portion or tab
- 72: Tapered surface
- 74: Tapered surface
- 76: Top surface
- 78: Bottom surface
- 80: Female connector portion or tab
- 82: Base
- 84: Arm
- 86: Tapered surface
- 88: Surface
- 90: Notch
- 92: Arm
- 94: Tapered surface
- 96: Surface
- 98: Notch
- 150: Retainer
- 151: Through-hole
- 160: Section
- 162: End
- 164: End
- 166: Radially outward facing surface
- 168: Radially inward facing surface
- 170A: Rib
- 170B: Rib
- 180: Section
- 182: End
- 184: End
- 186: Radially outward facing surface
- 188: Radially inward facing surface
- 190A: Rib
- 190B: Rib
- 200: Male connector portion or tab
- 202: End
- 204: End
- 206: Top surface
- 208: Bottom surface
- 210: Female connector portion or tab
- 212: End
- 214: End
- 216: Top surface
- 218: Bottom surface
- 220: Hole
- 222: Hole
- 224: Arm
- 226: Projection
- 228: Arm
- 230: Projection
- 232: Tapered surface
- 234: Tapered surface
- 250: Retainer
- 251: Through-bore
- 252: End
- 254: End
- 256: Radially outward facing surface
- 258: Notches
- 260: Radially inward facing surface
- 262: Rib
- 263A: Surface
- 263B: Surface
- 263C: Surface
- 264: Ring portion
- 266: End
- 268: End
- 270: Male connector portion or tab
- 272: Tapered surface
- 276: Top surface
- 278: Bottom surface
- 280: Female connector portion or tab
- 282: Base
- 284: Arm
- 286: Arm
- 288: Tapered surface
- 290: Channel
- 292: Surface
- 294: Surface
- 300: End
- 302: End
- 310: Protrusion
- 312: Tapered surface
- AD1: Axial direction
- AD2: Axial direction
- CD1: Circumferential direction
- CD2: Circumferential direction
- RD1: Radial direction
- RD2: Radial direction

## Claims

1. A retainer (50, 150, 250) for a fluid connection assembly (10), comprising:
a clamping portion (64, 160, 180, 264), including:
a first end (52, 162, 252);
a second end (54, 164, 254);
a radially outward facing surface (56, 166, 256);
a radially inward facing surface (58, 168, 258);
a first circumferential end (66, 266); and
a second circumferential end (68, 268) displaceable with respect to the first circumferential end (66, 266); and
a locking portion, including:
a first tab (70, 200, 270) connected to the first circumferential end (66, 266); and
a second tab (80, 210, 280) connected to the second circumferential end (68, 268), wherein the first tab (70, 200, 270) is arranged to engage the second tab (80, 210, 280) to lock the first tab (70, 200, 270) to the second tab (80, 210, 280).

2. The retainer (50, 250) as recited in claim 1, wherein the radially outward facing surface (56, 256) comprises a plurality of notches (58, 158) extending radially inward therefrom.

3. The retainer (50, 250) as recited in claim 2, wherein the plurality of notches (58, 158) are spaced apart in a circumferential direction (CD1, CD2).

4. The retainer (50, 250) as recited in claim 2, wherein the plurality of notches (58, 158) extend from the first end (52, 252) to the second end (54, 254).

5. The retainer (50, 150, 250) as recited in claim 1, wherein the radially inward facing surface (60, 168, 188, 260) comprises at least one rib (62, 170A, 170B, 190A, 190B, 262) arranged axially between and spaced apart from the first end (52, 162, 252) and the second end (54, 164, 254).

6. The retainer (250) as recited in claim 5, further comprising a protrusion (310) extending from the first circumferential end (266) in a circumferential direction (CD1) toward the second circumferential end (268).

7. The retainer (250) as recited in claim 6, wherein the protrusion (310) is connected to the radially inward facing surface (260) and arranged axially adjacent to the rib (262).

8. The retainer (250) as recited in claim 6, wherein the protrusion (310) is operatively arranged to maintain axial alignment of the rib (262) when the retainer (250) is being locked.

9. The retainer (50, 150, 250) as recited in claim 1, wherein at least one of the first tab (70, 200, 270) and the second tab (80, 210, 280) extends radially outward from the radially outward facing surface (56, 166, 186, 256).

10. The retainer (50, 250) as recited in claim 1, wherein the first tab (70, 270) comprises a tapered surface (72, 74, 272).

11. The retainer (50, 150, 250) as recited in claim 1, wherein the second tab (80, 210, 280) comprises a base (82, 216, 282) and at least one arm (84, 92, 224, 228, 284, 286) extending from and pivotably connected to the base (82, 216, 282), wherein the at least one arm (84, 92, 224, 228, 284, 286) is operatively arranged to engage the first tab (70, 200, 270) to lock the first tab (70, 200, 270) to the second tab (80, 210, 280).

12. The retainer (250) as recited in claim 11, wherein the at least one arm (284, 286) comprises:
a first arm (284) connected to the base (282); and
a second arm (286) connected to the first arm (284).

13. The retainer (250) as recited in claim 12, wherein:
the base (282) extends radially outward from the radially outward facing surface (256);
the first arm (284) extends in a circumferential direction (CD2) from the base (282); and
the second arm (286) extends radially inward from the first arm (284).

14. The retainer (250) as recited in claim 13, wherein:
a channel (290) is formed between the base (282), the first arm (284), and the second arm (286); and
the first tab (270) is operatively arranged to engage the channel (290) to lock the first tab (270) to the second tab (280).

15. The retainer (50, 150, 250) as recited in claim 11, wherein the at least one arm (84, 92, 224, 228, 284, 286) comprises a tapered surface (72, 74, 232, 234, 272, 288), wherein the tapered surface (72, 74, 232, 234, 272, 288) is operatively arranged to engage the first tab (70, 200, 270) to displace the at least one arm (84, 92, 224, 228, 284, 286).
